Europäisches Patentamt

European Patent Office

Office européen des brevets

(19)

(11) Veröffentlichungsnummer : **0 367 781 B1**

(12) **EUROPÄISCHE PATENTSCHRIFT**

(45) Veröffentlichungstag der Patentschrift :
**16.09.92 Patentblatt 92/38**

(51) Int. Cl.$^5$ : **H01C 10/34,** G01D 5/16,
G01B 7/30

(21) Anmeldenummer : **88905790.7**

(22) Anmeldetag : **30.06.88**

(86) Internationale Anmeldenummer :
**PCT/EP88/00579**

(87) Internationale Veröffentlichungsnummer :
**WO 89/00331 12.01.89 Gazette 89/02**

(54) **DREHWINKEL-POTENTIOMETER.**

(30) Priorität : **07.07.87 DE 3722389**

(43) Veröffentlichungstag der Anmeldung :
**16.05.90 Patentblatt 90/20**

(45) Bekanntmachung des Hinweises auf die
Patenterteilung :
**16.09.92 Patentblatt 92/38**

(84) Benannte Vertragsstaaten :
**DE FR GB IT SE**

(56) Entgegenhaltungen :
**EP-A- 0 153 241**
**DE-A- 3 332 007**
**GB-A- 2 141 287**

(73) Patentinhaber : **ZF FRIEDRICHSHAFEN**
**Aktiengesellschaft**
**Löwentaler Strasse 100 Postfach 2520**
**W-7990 Friedrichshafen 1 (DE)**

(72) Erfinder : **LANG, Armin**
**Rheinstrasse 10**
**W-7070 Schwäbisch Gmünd (DE)**

(74) Vertreter : **Raue, Reimund**
**ZF FRIEDRICHSHAFEN Aktiengesellschaft**
**Löwentalerstrasse 100 Postfach 2520**
**W-7990 Friedrichshafen 1 (DE)**

EP 0 367 781 B1

## Beschreibung

Die Erfindung betrift ein Potentiometer für die Messung des Drehwinkels einer Welle gegenüber einem feststehenden Teil, nach dem Oberbegriff des Anspruches 1.

Bei einem bekannten Potentiometer ist auf einer feststehenden Scheibe eine kreisbogenförmige Widerstandsbahn konzentrisch zu einer kreisbogenförmigen Kollektorbahn angeordnet. Zwei elastische Stromabnehmer-Schleifer sind mit einer Nabe auf der Welle festgehalten. Soll ein solches Potentiometer für eine redundante Drehwinkelanzeige ausgestattet werden, so muß eine zweite Kollektorbahn angeordnet werden. Diese zweite Kollektorbahn kann im gleichen radialen Bereich der ersten Kollektorbahn vorgesehen werden. Dadurch würde sich der Meßbereich halbieren. Wird die zweite Kollektorbahn dagegen radial außerhalb der bereits vorhandenen Widerstandsbahn und der Kollektorbahn angeordnet, wie es z. B. aus der DE-A 33 32 007 bekannt ist, so ergeben sich große radiale Abmessungen. Ähnlich liegt der Fall, wenn eine zweite Kollektorbahn gewünscht wird, um eine nahtlose Messung mehrerer Wellenumdrehungen vornehmen zu können. Auch hierbei müßte eine zweite Kollektorbahn radial außerhalb der bereits vorhandenen Bahnen angeordnet werden. Außerdem ist es vorstellbar, eine zweite Kollektorbahn und eine zweite Widerstandsbahn auf einer weiteren feststehenden Scheibe parallel zu der ersten Scheibe anzuordnen, wie es z. B. aus der GB-A 21 41 287 bekannt ist. Alle diese Anordnungen würden eine Vergrößerung des Potentiometers in radialer oder in axialer Richtung bewirken.

Der Erfindung liegt die Ausgabe zugrunde, ein Potentiometer für die angegebenen Einsatzfälle zu schaffen, das trotz des Vorhandenseins von zwei Kollektorbahnen sowohl in axialer als auch in radialer Richtung möglichst kleine Abmessungen aufweist.

Diese Aufgabe wird durch das im Anspruch 1 gekennzeichnete Potentiometer gelöst. Vorteilhafte und zweckmäßige Ausgestaltungen sind in den Unteransprüchen angegeben.

Durch die konzentrische Anordnung von zwei kreisförmigen Kollektorbahnen auf einer mit der Welle umlaufenden Scheibe wird entweder ein redundantes Potentiometer mit einem Meßwinkel zwischen 180° und 360° oder ein einfaches Potentiometer zur nahtlosen Messung mehrerer Wellenumdrehungen geschaffen, das nur sehr kleine radiale Abmessungen aufweist. Da die umlaufende Scheibe nur eine sehr geringe Dicke besitzen muß, ist auch die axiale Abmessung des Potentiometers nicht größer als die eines bekannten Potentiometers.

Im folgenden wird die Erfindung anhand zweier Ausführungsbeispiele näher erläutert. Es zeigt

Fig. 1 das Potentiometer nach einem ersten Ausführungsbeispiel,

Fig. 2 einen Querschnitt durch das Potentiometer gemäß der Linie II-II in Fig. 1,

Fig. 3 einen Querschnitt durch das Potentiometer gemäß der Linie III-III in Fig. 1,

Fig. 4 das Potentiometer nach einem zweiten Ausführungsbeispiel,

Fig. 5 einen Querschnitt durch das Potentiometer gemäß der Linie V-V in Fig. 4,

Fig. 6 Querschnitte durch das Potentiometer gemäß der Linie VI-VI in Fig. 4 in verschiedenen Herstellungsstufen.

Die Grundelemente des erfindungsgemäßen Potentiometers sind gebildet durch eine feststehende Scheibe 1 und eine zusammen mit einer Welle 2 umlaufenden Scheibe 3. Bei dem ersten Ausführungsbeispiel des Potentiometers, das zur redundanten Messung des Drehwinkels der Welle 2 dient, sind auf der feststehenden Scheibe 1 zwei kreisbogenförmige Widerstandsbahnen 4 und 5 aufgebracht. Jede der beiden Widerstandsbahnen besitzt an ihren Enden je eine Anschlußfahne 6 und 7 bzw. 8 und 9. An der feststehenden Scheibe 1 sind außerdem noch zwei Anschlußfahnen 10 und 11 befestigt, die mit zwei Stromabnehmer-Schleifern 12 und 13 in Verbindung stehen. Die Stromabnehmer-Schleifer 12 und 13 dienen zum begriff des Stromes von zwei Kollektorbahnen 14 und 15, die als konzentrische Kreisbahnen auf der umlaufenden Scheibe 3 aufgebracht sind. Die zusammen mit der Welle 2 umlaufende Scheibe 3 ist beispielsweise durch drei an der umlaufenden Scheibe 3 angenietete Krallen 16 mit der Welle 2 verbunden.

An der umlaufenden Scheibe 3 sind im Bereich der beiden Kollektorbahnen 14 und 15 zwei Stromabnehmer-Schleifer 17 und 18 befestigt, die mit den beiden Widerstandsbahnen 4 und 5 in federndem Kontakt stehen.

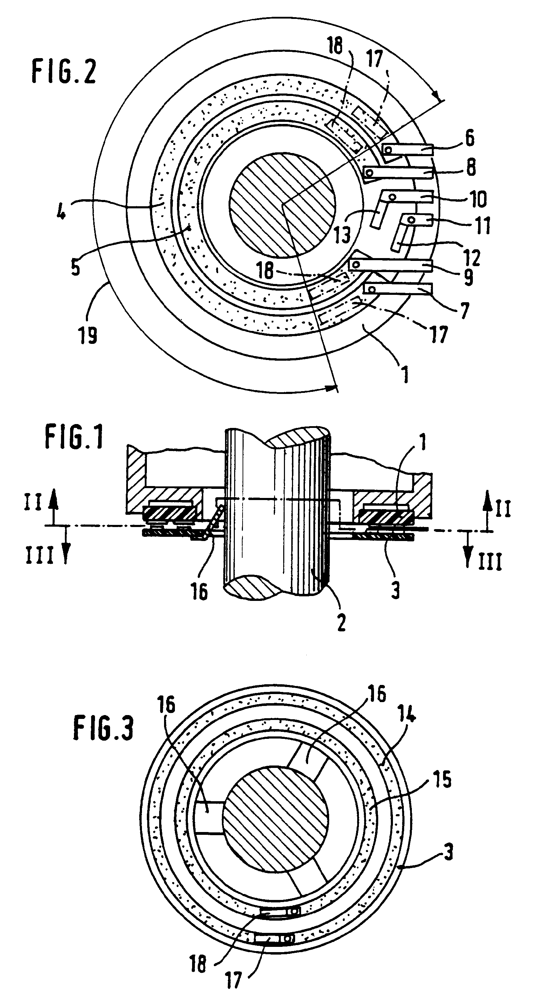

Der mit diesem Potentiometer meßbare größte Verdrehwinkel 19 der Welle 2 wird bestimmt durch den Platzbedarf für die Anschlußfahnen 6, 7, 8, 9, 10 und 11 sowie die dadurch bestimmten Endstellungen der Stromabnehmer-Schleifer 17 und 18 in bezug auf die Widerstandsbahnen 4 und 5. Der Verdrehwinkel 19 beträgt dabei mehr als 250°. Die beiden Endstellungen der Stromabnehmer-Schleifer 17 und 18 sind in Fig. 2 strichpunktiert eingezeichnet.

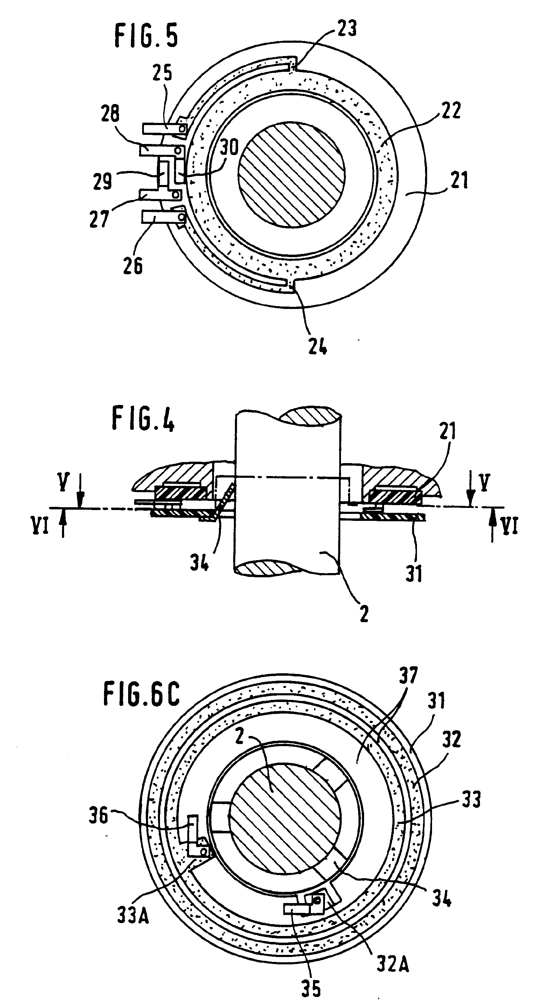

Das in Fig. 4 dargestellte Potentiometer gemäß dem zweiten Ausführungsbeispiel dient zur Messung mehrerer Lenkspindelumdrehungen durch zwei gegeneinander versetzte Meßsignale. Auf der feststehenden Scheibe 21 ist eine kreisringförmige Widerstandsbahn 22 aufgebracht. Die Widerstandsbahn 22 ist an zwei zueinander um 180° versetzten Widerstands-Abgriffstellen 23 und 24 mit zwei Anschlußfahnen 25 und 26 verbunden.

An der feststehenden Scheibe 21 sind zwei Anschlußfahnen 27 und 28 befestigt, die mit zwei Stromabnehmer-Schleifern 29 und 30 verbunden sind. Die Stromabnehmer-Schleifer 29 und 30 stehen in Kontakt mit zwei konzentrisch zueinander auf der umlaufenden Scheibe 31 angeordneten, kreisringförmigen Kollektorbahnen 32 und 33. Die umlaufende Scheibe 31 ist wie die umlaufende Scheibe 3 des eisten Ausführungsbeispieles beispielsweise durch Krallen 34 mit der Welle 2 drehfest verbunden. An der umlaufenden Scheibe 31 sind zwei um beispielsweise 90° zueinander versetzt angeordnete Stromabnehmer-Schleifer 35 und 36 befestigt, die mit den Kollektorbahnen 32 und 33 verbunden sind und in federndem Kontakt zu der Widerstandsbahn 22 stehen,

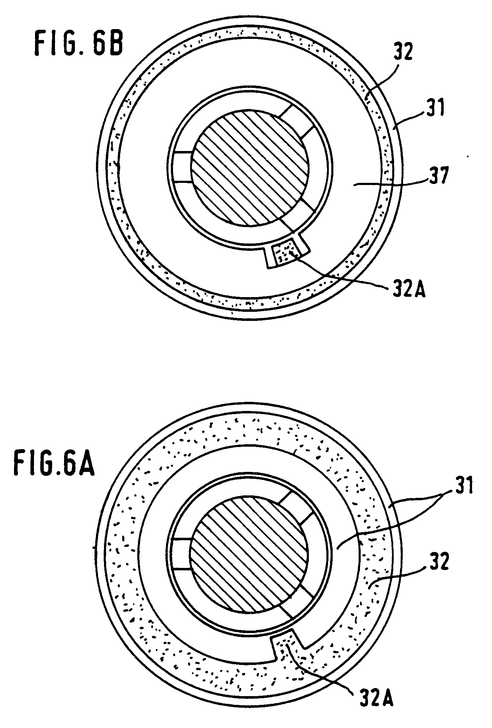

In den Fig. 6A bis 6C ist der Herstellungsgang der Kollektorbahnen 32 und 33 auf der umlaufenden Scheibe 31 dargestellt, Gemäß Fig. 6A wird auf die umlaufende Scheibe 31 zunächst die radial äußere Kollektorbahn 32 als geschlossener Kreisring aufgetragen, der einen radial nach innen gerichteten Fortsatz 32A aufweist. Gemäß Fig. 6B wird nun eine Isolierschicht 37 auf die umlaufende Scheibe 31 aufgetragen, die die Kollektorbahn 32 teilweise überdeckt und oberflächlich von dem Fortsatz 32A trennt. Gemäß Fig. 6C wird danach die innere Kollektorbahn 33 auf die Isolierschicht 37 aufgebracht derart, daß die innere Kollektorbahn 33 von der äußeren Kollektorbahn 32 und dem radial nach innen gerichteten Fortsatz 32A isoliert ist. Die innere Kollektorbahn 33 weist ebenfalls einen radial nach innen gerichteten Fortsatz 33A auf. Die beiden Fortsätze 32A und 33A liegen im radialen Bereich der Widerstandsbahn 22 und dienen zum Anschluß der Stromabnehmer-Schleifer 35 und 36 an die Kollektorbahnen 32 und 33.

Die Funktion der erfindungsgemäßen Potentiometer entspricht der Funktion bekannter Potentiometer. Bei dem Ausführungsbeispiel nach den Fig. 1 bis 3 werden dabei zwei redundante Meßwerte an den Anschlußfahnen 10 und 11 abgenommen.

Bei dem Ausführungsbeispiel nach den Fig. 5 bis 6 werden an den Anschlußfahnen 27 und 28 zwei Meßwerte abgenommen, die entsprechend der Drehung der Welle zwei zueinander um 90° versetzte Sinus-Linien erzeugen.

Bezugszeichen

| | | | | |
|---|---|---|---|---|
| 1 | feststehende Scheibe | 31 | umlaufende Scheibe |
| 2 | Welle | 32 | Kollektorbahn |
| 3 | umlaufende Scheibe | 32A | Fortsatz |
| 4 | Widerstandsbahn | 33 | Kollektorbahn |
| 5 | Widerstandsbahn | 33A | Fortsatz |
| 6 | Anschlußfahne | 34 | Kralle |
| 7 | Anschlußfahne | 35 | Stromabnehmer-Schleifer |
| 8 | Anschlußfahne | 36 | Stromabnehmer-Schleifer |
| 9 | Anschlußfahne | 37 | Isolierschicht |
| 10 | Anschlußfahne |
| 11 | Anschlußfahne |
| 12 | Stromabnehmer-Schleifer |
| 13 | Stromabnehmer-Schleifer |
| 14 | Kollektorbahn |
| 15 | Kollektorbahn |
| 16 | Kralle |
| 17 | Stromabnehmer-Schleifer |
| 18 | Stromabnehmer-Schleifer |
| 19 | Verdrehwinkel |
| 20 | |
| 21 | feststehende Scheibe |
| 22 | Widerstandsbahn |
| 23 | Widerstands-Abgriffstelle |
| 24 | Widerstands-Abgriffstelle |
| 25 | Anschlußfahne |
| 26 | Anschlußfahne |
| 27 | Anschlußfahne |
| 28 | Anschlußfahne |
| 29 | Stromabnehmer-Schleifer |
| 30 | Stromabnehmer-Schleifer |

**Patentansprüche**

1. Potentiometer für die Messung des Drehwinkels einer Welle (2) gegenüber einem feststehenden Teil,
   – mit wenigstens einer auf einer feststehenden Scheibe (l; 2l) angeordneten kreisbogenförmigen Widerstandsbahn (4, 5; 22),

– mit wenigstens einer kreisbogenförmigen Kollektorbahn (l4, 15; 32, 33),

– mit wenigstens einem, mit der Widerstandsbahn (4, 5; 22) in Kontakt stehenden Stromabnehmer-Schleifer (17, 18; 35, 36) und

– mit wenigstens einem, mit der kollektorban (14, 15; 32, 33) in kontakt stehenden Stromabnehmer-Schleifer (12, 13; 29, 30),

dadurch **gekennzeichnet,**

– daß zwei Kollektorbahnen (14, 15; 32, 33) auf einer zusammen mit der Welle (2) umlaufenden Scheibe (3; 31) konzentrisch zueinander angeordnet sind,

– daß die Kollektorbahnen (14, 15; 32, 33) kreisringförmig ausgebildet sind,

– daß jeder der Kollektorbahnen (14, 15; 32, 33) ein mit der feststehenden Scheibe (1, 21) verbundener, mit der jeweiligen Kollektorbahn (14, 15; 32, 33) in Kontakt stehender Stromabnehmer-Schleife: (12, 13; 29, 30) zugeordnet ist und

– daß zwei Stromabnehmer-Schleifer (17, 18; 35, 36) vorgesehen sind, welche mit jeweils einer der Kollektorbahnen (14, 15; 32, 33) verbunden sind und mit der Widerstandsbahn (4, 5; 22) in Kontakt stehen.

2. Potentiometer nach Anspruch 1, dadurch **gekennzeichnet,** daß auf der feststehenden Scheibe (1) zwei kreisbogenförmige Widerstandsbahnen (4, 5) konzentrisch zueinander angeordnet sind, von denen jeweils eine mit einem der mit den Kollektorbahnen verbundenen Stromabnehmer-Schleifer (17, 18) in Kontakt steht (Fig. 1 - 3).

3. Potentiometer nach Anspruch 1, dadurch **gekennzeichnet,**

– daß die auf der feststehenden Scheibe (21) angeordnete Widerstandsbahn (22) kreisringförmig ausgebildet ist und

– daß die mit den Kollektorbahnen (32, 33) verbundenen und mit der Widerstandsbahn (22) in Kontakt stehenden Stromabnehmer-Schleifer (35, 36) um einen bestimmten Winkel gegeneinander versetzt angeordnet sind (Fig. 4 bis 6).

4. Potentiometer nach Anspruch 3, dadurch **gekennzeichnet,** daß der Winkel 90° beträgt.

## Claims

1. Potentiometer for measuring the angle of rotation of a shaft (2) with respect to a stationary part, with at least one circular arc-shaped resistance track (4, 5; 22), which is arranged on a stationary disc (1; 21), at least one circular arc-shaped collector track (14, 15; 32, 33), at least one current pick-up slider (17, 18; 35, 36) which is in contact with the resistance track (4, 5; 22), and at least one current pick-up slider (12, 13; 29, 30) which is in contact with the collector track (14, 15; 32, 33), characterised in that two collector tracks (14, 15; 32, 33) are arranged concentrically with one another on a disc (3; 31), which rotates with the shaft (2), that the collector tracks (14, 15; 32, 33) are in the shape of a circular ring, that a current pick-up slider (12, 13; 29, 30) which is connected to the stationary disc (1, 21) and in contact with the respective collector track (14, 15; 32, 33) is associated with each collector track (14, 15; 32, 33), and that two current pick-up sliders (17, 18; 35, 36) are provided which are in each case connected to one of the collector tracks (14, 15; 32, 33) and in contact with the resistance track (4, 5; 22).

2. Potentiometer according to claim 1, characterised in that two circular arc-shaped resistance tracks (4, 5) are arranged concentrically with one another on the stationary disc (1), each of which tracks is in contact with one of the current pick-up sliders (17, 18) which are connected to the collector tracks (Figures 1 - 3).

3. Potentiometer according to claim 1, characterised in that the resistance track (22) which is arranged on the stationary disc (21) is in the shape of a circular ring, and that the current pick-up sliders (35, 36) which are connected to the collector tracks (32, 33) and in contact with the resistance track (22) are staggered by a certain angle (Figures 4 to 6).

4. Potentiometer according to claim 3, characterised in that the angle is 90°.

## Revendications

1. Potentiomètre pour mesurer l'angle de rotation d'un arbre (2) par rapport à un élément fixe, comportant :

– au moins une piste résistante (4, 5; 22) en forme d'arc de cercle, disposée sur un disque fixe (1; 21),
– au moins une piste collectrice (14, 15; 32, 33) en forme d'arc de cercle,
– au moins un contact glissant de prise de courant (17, 18; 35, 36) qui est en contact avec la piste résistante (4, 5; 22), et
– au moins un contact glissant de prise de courant (12, 13; 29, 30) qui est en contact avec la piste collectrice (14, 15; 32, 33),
**caractérisé** en ce que :
– deux pistes collectrices (14, 15; 32, 33) sont disposées concentriquement sur un disque (3; 31) tournant en commun avec l'arbre (2),
– ces pistes collectrices (14, 15; 32, 33) sont en forme d'arcs de cercle,
– à chacune des pistes collectrices (14, 15; 32, 33) est associé un contact glissant de prise de courant (12, 13; 29, 30), lié au disque fixe (1, 21) et étant en contact avec la piste collectrice correspondante (14, 15; 32, 33), et
– deux contacts glissants de prise de courant (17, 18; 35, 36) sont liés chacun à l'une des pistes collectrices (14, 15; 32, 33) et sont en contact avec la piste résistante (4, 5; 22).

2.  Potentiomètre selon la revendication 1, **caractérisé** en ce que deux pistes résistantes en forme d'arcs de cercle (4, 5) sont disposées concentriquement sur le disque fixe (1), chacune étant en contact avec un des contacts glissants de prise de courant (17, 18) qui sont liés aux pistes collectrices (Fig. 1-3).

3.  Potentiomètre selon la revendication 1, **caractérisé** en ce que :
– la piste résistante (22) disposée sur le disque fixe (21) est circulaire, et
– les contacts glissants de prise de courant (35, 36) qui sont liés aux pistes collectrices (32, 33) et en contact avec la piste résistante (22) sont mutuellement décalés d'un angle déterminé (Fig. 4 à 6)

4.  Potentiomètre selon la revendication 3, **caractérisé** en ce que ledit angle vaut 90°.

FIG.2

FIG.1

FIG.3

FIG.5

FIG.4

FIG.6C

FIG. 6B

32
31
37
32A

FIG.6A

31
32
32A